# EUROPÄISCHE PATENTSCHRIFT

(11) **EP 0 925 626 B1**
(45) Veröffentlichungstag und Bekanntmachung des Hinweises auf die Patenterteilung: **14.11.2001**
(21) Anmeldenummer: 97940132.0
(22) Anmeldetag: 27.08.1997
(51) Int. Cl.: H02J 1/14, H02J 7/00

(54) **VERFAHREN UND ANORDNUNG ZUR ABSCHALTUNG VON VERBRAUCHERN**
METHOD AND ARRANGEMENT FOR DISCONNECTING CONSUMERS
PROCEDE ET DISPOSITIF POUR DECONNECTER DES CONSOMMATEURS

(30) Priorität: 14.09.1996 DE 19637574
(43) Veröffentlichungstag der Anmeldung: 30.06.1999
(73) Patentinhaber: Braun GmbH, Kronberg (DE)
(72) Erfinder: LOTH-KRAUSSER, Hartmut, D-64589 Stockstadt am Rhein (DE)
(86) Internationale Anmeldenummer: EP9704664
(87) Internationale Veröffentlichungsnummer: WO9811644

(56) Entgegenhaltungen:
- DE-A- 4 429 101
- DE-C- 4 241 066
- US-A- 5 204 992
- US-A- 5 343 137

## Beschreibung

Die Erfindung betrifft ein Verfahren und eine Anordnung zur Abschaltung von an eine Spannungsquelle, beispielsweise eine Gleichspannungsquelle, angeschlossenen Verbrauchern. Verbraucher im Sinne dieser Erfindung sind insbesondere in an sich bekannten solarzellen-, primär- oder sekundärbatteriebetriebenen zumeist mobilen Geräten enthaltene Stromverbraucher, beispielsweise elektronische Schaltungen, Motore, Mikroprozessoren oder dergleichen.

Aus den DE 41 31 981 A1 und DE 42 41 066 A1 sind Schaltungen bekannt, bei denen ein Spannungsdiskriminator die Spannung einer Batterie bestimmt. Nach Erreichen eines bestimmten Spannungswerts wird der Strom durch einen an die Batterie angeschlossenen Verbraucher mittels einer Steuerschaltung kontinuierlich oder stufenweise auf Null reduziert. Allerdings wird bei diesen Schaltungen lediglich die Belastung der Batterie durch den stromintensivsten Verbraucher reduziert. Andere Systemkomponenten, beispielsweise die Steuerschaltung selbst, entleeren die Batterie weiter, wenn auch langsamer.

Aus der EP240883 ist eine Schaltung bekannt, in der ein Verbraucherstrom durch Schaltertaktung verringert wird, wenn die versorgende Batteriespannung auf einen ersten bestimmten Wert abgesunken ist. Bei Erreichen eines zweiten, niedrigeren Batteriespannungswertes wird der Verbraucher ganz abgeschaltet.

Aus der DE 41 16 318 A1 ist eine Schaltung zum Schutz eines Akkumulators vor Tiefentladung bekannt, die eine elektronische Schalteinrichtung aufweist, die unterhalb eines definierbaren Schwellwerts der Akkumulatorspannung die angeschlossene Last vom Akkumulator trennt.

Bei den bekannten Schaltungen werden somit aufgrund der bei fortschreitender Entladung der Batterie abnehmenden Batteriespannung die angeschlossenen Verbraucher entweder abrupt von der Batterie getrennt oder in einem gewissen Zeitraum abgeregelt, und dadurch eine Tiefentladung der Batterie vermieden. Dies ist insbesondere bei Lithium-Sekundärbatterien wichtig, um eine Schädigung der Batterie zu verhindern.

Die vorliegende Erfindung basiert auf der Erkenntnis, daß in einem elektrischen Gerät häufig verschiedene Verbraucher vorhanden sind, von denen ein Teil bei Eintreten einer oder mehrerer Abschaltbedingungen sofort abgeschaltet werden kann, wogegen ein anderer Teil der Verbraucher aus sicherheitstechnischen Gründen oder psychologischen Aspekten langsam abgeregelt werden sollte.

Als Beispiel hierfür soll ein elektrisches Haushaltsgerät, insbesondere ein batteriebetriebener Rasierer genannt sein, dessen Motor bei Eintreten einer Abschaltbedingung langsam abgeregelt werden muß, um ein schmerzhaftes Einklemmen von Barthaaren zu verhindern. Dagegen kann beispielsweise ein Mikrocontroller oder eine Meßschaltung schnell abgeschaltet werden.

Aber auch bei Systemen, die an sich eine schnelle Abschaltung zuließen, kann eine langsame Verringerung der Intensität von wahrnehmbaren Funktionsindikatoren wie beispielsweise Leucht- oder Lautstärke dem Benutzer einen Hinweis auf die eingetretene Entladung der Sekundärbatterie geben, wogegen ein plötzliches Funktionsende einen Defekt suggerieren könnte.

Bei der vorliegenden Erfindung werden nach Eintreten mindestens einer Abschaltbedingung an eine Spannungsquelle angeschlossene Verbraucher gemäß dem im Anspruch 1 angegebenen Verfahren in zwei Schritten von einer Spannungsquelle getrennt, nämlich zuerst wird der Strom durch die Verbraucher verringert, für die eine langsame Abregelung geboten ist, und danach die restlichen Verbraucher abgeschaltet.

Durch die zeitlich hintereinander erfolgende Abschaltung der verschiedenen Verbraucher bleiben insbesondere die Systeme, die zum langsamen Abregeln der Verbraucher benötigt werden, solange funktionsfähig, bis der Abregelungsprozeß abgeschlossen ist. Danach werden auch diese Systeme abgeschaltet.

Der Strom durch die abzuregelnden Verbraucher wird erfindungsgemäß bis auf einen voreinstellbaren Wert, beispielsweise Null, reduziert. Durch die nachfolgende Abschaltung der abzuschaltenden Verbraucher werden vorzugsweise auch die bereits abgeregelten Verbraucher von der Spannungsquelle getrennt. Dies ist insbesondere dann nötig, wenn der oben genannte voreinstellbare Wert nicht gleich Null ist.

In dem Fall, in dem die Abschaltbedingung durch die Größe der Spannung einer Spannungsquelle definiert ist, ist es besonders vorteilhaft, wenn Spannungssensoren mit digitalem Ausgang verwendet werden, so daß deren Ausgangssignal bei einem einstellbaren Schwellwert von LOW auf HIGH oder umgekehrt wechselt. Dadurch läßt sich durch Wahl des Schwellwerts die erfindungsgemäße Schaltungsanordnung an die Spannungen unterschiedlichster Spannungsquellen, beispielsweise beliebige Batterietypen oder Solarzellen, anpassen.

Die Abschaltbedingung kann jedoch auch durch die Temperatur oder andere Meßgrößen, wie beispielsweise Drehzahl, Strom, Helligkeit oder Lautstärke, festgelegt werden, die durch entsprechende Sensoren erfaßt werden.

Erfindungsgemäß beginnt die Abregelung eines abzuregelnden Verbrauchers erst dann, wenn das Ausgangssignal eines ersten Spannungssensors das Unterschreiten der von der Spannungsquelle gelieferten Spannung UBATT unter einen bestimmten Schwellwert UBATTmin detektiert oder eine andere Abschaltbedingung eingetreten ist. Dieser Fall tritt bei einer Solarzelle beispielsweise mit eintretender Dämmerung ein, bei einer Sekundärbatterie mit zunehmender Entladung. Der Abregelungsvorgang gilt als abgeschlossen, wenn ein zweiter Spannungssensor das Unterschreiten der an den abzuregelnden Verbrauchern anliegenden Versorgungsspannung UV unter einen bestimmten Schwellwert UVmin detektiert, oder eine bestimmte Zeit verstrichen ist, von der angenommen wird, daß sie für die Durchführung der Abregelung ausreichend lang ist. Erst danach werden die abrupt abschaltbaren Verbraucher und vorzugsweise auch sicherheitshalber die bereits abgeregelten Verbraucher von der Spannungsquelle getrennt.

Steigt die Spannung der Spannungsquelle wieder über diesen Schwellwert UBATTmin oder einen anderen Schwellwert UBATTmin' an, werden die Verbraucher wieder mit Strom versorgt. Das Ansteigen der Spannung kann beispielsweise durch Austausch oder Aufladen der Sekundärbatterie oder durch Anschließen eines Netzteils bedingt sein.

Bei entsprechender Auslegung des Netzteils kann in an sich bekannter Weise ein two-way-Betrieb der Verbraucher erfolgen, d.h. die Verbraucher werden durch das Netzteil mit Strom versorgt und ggfs. die Sekundärbatterie wieder aufgeladen. Dadurch können die Verbraucher auch bei entladener Sekundärbatterie betrieben werden.

Die Erfindung wird nachstehend anhand eines Ausführungsbeispiels für eine Schaltungsanordnung zur Abschaltung von an eine Spannungsquelle angeschlossenen Verbrauchern erläutert, die in den Zeichnungen dargestellt ist. Weitere Ausgestaltungen sind in der Beschreibung beschrieben. Es zeigen:
- Fig. 1: ein Blockschaltbild einer erfindungsgemäßen Schaltungsanordnung;
- Fig. 2: eine Ausführung der Abregelungsschaltung nach Fig. 1.

Die erfindungsgemäße Schaltungsanordnung enthält einen ersten Spannungssensor SE1, einen zweiten Spannungssensor SE2, ein steuerbares Schaltelement M1, ein steuerbares Widerstandselement M2 und eine Regelschaltung, die eine logische Verknüpfungsschaltung L und eine Abregelungsschaltung A enthält. Die Schaltungsanordnung weist eine Anschlußklemme 1 auf, die mit dem Pluspol einer Sekundärbatterie B verbunden ist, sowie eine Masseklemme 2, die mit dem Minuspol der Sekundärbatterie B verbunden ist. Ein mechanischer Schalter S1 verbindet die Masseklemme 2 mit einem Masseleitungsteilstück GND2. Der erste Spannungssensor SE1 ist mit seinen Versorgungsspannungs- und zugleich Senseanschlüssen zwischen eine mit der Anschlußklemme 1 verbundene Versorgungsspannungsleitung und das Masseleitungsteilstück GND2 geschaltet. Die logische Verknüpfungsschaltung L ist mit ihren Versorgungsspannungsanschlüssen ebenfalls zwischen die Versorgungsspannungsleitung und das Masseleitungsteilstück GND2 geschaltet. Das steuerbare Schalterelement M1 befindet sich zwischen dem Masseleitungsteilstück GND2 und einem weiteren Masseleitungsteilstück GND3, und weist einen Steuereingang auf, dem ein Ausgangssignal U4 der logischen Verknüpfungsschaltung L zuführbar ist. Eine Reihenschaltung aus dem steuerbaren Widerstandselement M2 und ersten Verbrauchern V ist zwischen die Versorgungsspannungsleitung und das weitere Masseleitungsteilstück GND3 geschaltet. Parallel dazu sind weitere Verbraucher V1 sowie die Versorgungsspannungsanschlüsse der Abregelungschaltung A geschaltet. Der zweite Spannungssensor SE2 ist mit seinen Versorgungsspannungs- und Senseanschlüssen parallel zu den ersten Verbrauchern V geschaltet.

Die Ausgänge des ersten Spannungssensors SE1, des zweiten Spannungssensors SE2, und gegebenenfalls weiterer Sensoren SE3 sind mit entsprechenden Eingängen der logischen Verknüpfungsschaltung L verbunden. Der Ausgang des ersten Spannungssensors SE1 ist ferner mit einem ersten Eingang der Abregelungsschaltung A verbunden. Ein zweiter Eingang der Abregelungsschaltung A ist mit dem Verbindungspunkt zwischen dem steuerbaren Widerstandselement M2 und den ersten Verbrauchern V verbunden. Der Steuerausgang der Abregelungsschaltung A ist mit dem Steuereingang des steuerbaren Widerstandselements M2 verbunden.

Nachfolgend wird die Funktion der erfindungsgemäßen Schaltungsanordnung beschrieben, wobei von der Anfangsbedingung ausgegangen wird, daß die Sekundärbatterie B aufgeladen ist.

Zum Einschalten des Systems wird der mechanische Schalter S1 geschlossen. Daraufhin liefert der erste Spannungssensor SE1 ein Ausgangssignal U2, das den Wert HIGH annimmt, und dadurch anzeigt, daß die Sekundärbatteriespannung UBATT über einer Abschaltspannung UBATTmin liegt. Der zweite Spannungssensor SE2 liefert ein Ausganssignal U1, das den Wert LOW annimmt, und dadurch anzeigt, daß die Versorgungsspannung UV der ersten Verbraucher V unterhalb eines Schwellwerts UVmin liegt. Die Ausgangssignale U2 und U1 des ersten bzw. zweiten Spannungssensors liegen an den entsprechenden Eingängen der logischen Verknüpfungsschaltung L an, die unter diesen Bedingungen das Ausgangssignal U4 mit dem Wert HIGH liefert, das dem steuerbaren Schalterelement M1 zugeführt wird. Dadurch wird durch das steuerbare Schalterelement M1 das Masseleitungsteilstück GND2 mit dem weiteren Masseleitungsteilstück GND3 verbunden, so daß die weiteren Verbraucher V1, die Abregelungsschaltung A und der zweite Spannungssensor SE2 durch die Sekundärbatterie B mit Spannung versorgt werden. Das am ersten Eingang der Abregelungsschaltung A anliegende Ausgangssignal U2 des ersten Spannungssensors SE1, das den Wert HIGH annimmt, bewirkt, daß die Abregelungsschaltung A das steuerbare Widerstandselement M2 durchschaltet, so daß auch die ersten Verbraucher V über das steuerbare Widerstandselement M2 mit Spannung versorgt werden. Dabei entspricht die Versorgungsspannung UV der ersten Verbraucher V praktisch der Versorgungsspannung UBATT der Sekundärbatterie B, und liegt somit über einem Schwellwert UVmin. Daher liefert der zweite Spannungssensor SE2 ein Ausgangssignal U1, das den Wert HIGH annimmt. Damit befindet sich jetzt das System im betriebsbereiten Zustand.

Mit zunehmender Betriebsdauer nimmt die Sekundärbatteriespannung UBATT ab, und erreicht die Abschaltspannung UBATTmin. Daraufhin ändert sich das Ausgangssignal U2 des ersten Spannungssensors SE1 von HIGH auf LOW. Daraufhin reduziert die Abregelungsschaltung A nach einem definierten zeitlichen Verlauf die Versorgungsspannung UV der ersten Verbraucher V, indem sie das steuerbare Widerstandselement M2 zeitabhängig so steuert, daß sich dessen Widerstandswert zeitabhängig vergrößert. Dadurch verringert sich die Versorgungsspannung UV der ersten Verbraucher V bis auf einen Schwellwert UVmin. Beim Erreichen dieses Schwellwerts UVmin wechselt die Ausgangsspannung des zweiten Spannungssensors SE2 von HIGH auf LOW. Da jetzt beide Ausgangsspannungen U1 und U2 der Spannungssensoren den Wert LOW annehmen, wechselt die Ausgangsspannung U4 der logischen Verknüpfungsschaltung L von HIGH auf LOW, wodurch das steuerbare Schaltelement M1 geöffnet wird. Dadurch werden alle Verbraucher außer dem Spannungssensor SE1 und der logischen Verknüpfungsschaltung L von der Sekundärbatterie B getrennt.

Da der erste Spannungssensor SE1 und die logische Verknüpfungsschaltung L so ausgelegt sein können, daß ihre Versorgungsströme im Mikroamperebereich liegen, wird durch den Spannungssensor SE1 und die logische Verknüpfungsschaltung L die Sekundärbatterie B nur so langsam entladen, daß normalerweise damit gerechnet werden kann, daß die Sekundärbatterie B vom Benutzer rechtzeitig vor einer Tiefentladung wieder aufgeladen wird. Jedoch kann durch Betätigen des mechanischen Schalters S1 auch noch der erste Spannungssensor SE1 und die logische Verknüpfungsschaltung L von der Sekundärbatterie B getrennt werden, so daß dadurch ein sicherer Schutz vor Tiefentladung der Sekundärbatterie B erreicht werden kann.

Nach Entladung der Sekundärbatterie B kann das System durch den Einsatz eines Netzteils wieder in Betrieb genommen werden. Durch Betätigen des mechanischen Schalters S1 können die Verbraucher erst dann wieder betrieben werden, wenn zwischenzeitlich ein Ladenetzteil die Sekundärbatterie B so weit aufgeladen hat, daß die Sekundärbatteriespannung UBATT über den Wert UBATTmin angestiegen ist, und somit der erste Spannungssensor SE1 wieder ein Ausgangssignal U2 mit dem Wert HIGH liefert.

Bei einer anderen Ausführung der erfindungsgemäßen Schaltungsanordnung kann das System auch bei entladener Sekundärbatterie allein über ein entsprechend ausgelegtes Ladenetzteil N betrieben werden. Dazu weist die logische Verknüpfungsschaltung L einen weiteren Eingang auf, dem das Ausgangssignal U3 des Ladenetzteils N zugeführt wird. Solange das Ladenetzteil N mit dem Netz verbunden ist, nimmt das Ausgangssignal des Ladenetzteils den Wert HIGH an. Bei geschlossenem mechanischem Schalter S1 wird dadurch das Ausgangssignal U4 der logischen Verknüpfungsschaltung L wieder auf den Wert HIGH gesetzt, so daß das steuerbare Schaltelement M1 geschlossen wird. Damit wird das System mit dem vom Ladenetzteil N gelieferten Strom betrieben. Gleichzeitig kann die Sekundärbatterie B wieder aufgeladen werden. Nach vollständiger Aufladung der Sekundärbatterie B schaltet sich das Ladenetzteil N ab. Gleichzeitig wechselt das Ausgangssignal U3 des Ladenetzteils N von HIGH auf LOW.

Aus der vorstehenden Beschreibung ergibt sich, daß das Ausgangssignal U4 der logischen Verknüpfungsschaltung L nur dann den Wert LOW annimmt, und damit das steuerbare Schaltelement M1 öffnet, wenn jedes der drei Signale U1, U2 und U3 den Wert LOW annimmt. Daher kann die logische Verknüpfungsschaltung L als ODER-Gatter ausgeführt sein. Bei einer anderen Ausführung der logischen Verknüpfungsschaltung können für die Signale U1, U2 und U3 entsprechend andere Werte gewählt sein. Als steuerbares Schaltelement M1 findet beispielsweise ein Relais oder ein MOS-FET Verwendung. Das steuerbare Widerstandselement M2 ist vorzugsweise ein MOS-FET.

Bei einer weiteren Ausführung der erfindungsgemäßen Schaltungsanordnung ist die Schaltschwelle des ersten Spannungssensors SE1 einstellbar. Dadurch kann die Schaltungsanordnung auf unterschiedliche Abschaltspannungen eingestellt werden, und ist daher an verschiedene Sekundärbatterie-Typen, Solarzellen, etc. anpaßbar.

Wenn eine modifizierte logische Verknüpfungsschaltung L weitere Eingänge aufweist, können diesen die Ausgangssignale weiterer Sensoren SE3 zugeführt werden. Dadurch lassen sich weitere Abschaltbedingungen realisieren, beispielsweise eine Temperaturabschaltung, die ein Überhitzen eines Verbrauchers verhindert.

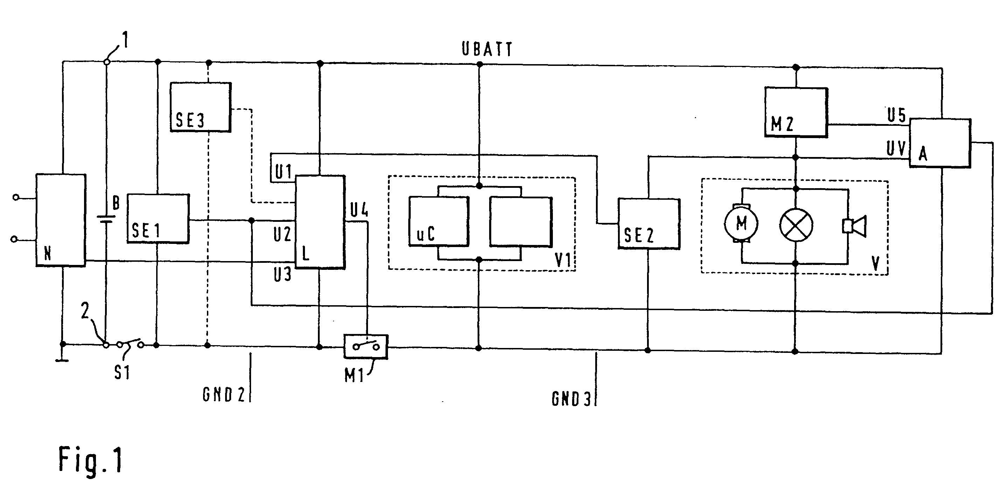

Wie in Fig. 1 dargestellt ist, werden die ersten Verbraucher V gemeinsam durch die Abregelungsschaltung A abgeregelt. Bei einer modifizierten Schaltungsanordnung ist für jeden abzuregelnden Verbraucher eine eigene Abregelungsschaltung und ein eigenes steuerbares Widerstandselement vorgesehen.

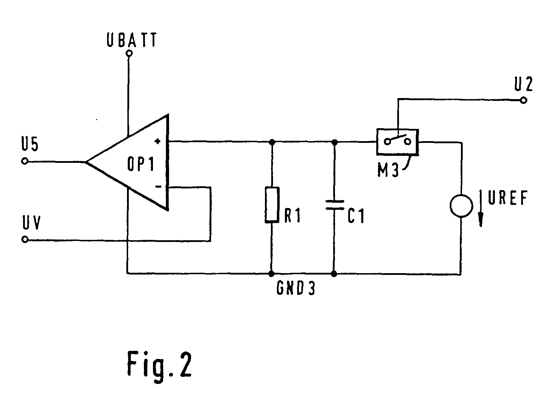

Nachfolgend wird eine vorteilhafte Ausbildung der Abregelungsschaltung A beschrieben, die in Fig. 2 dargestellt ist. Die Abregelungsschaltung A weist einen Operationsverstärker OP1 auf, dessen invertierendem Eingang die Versorgungsspannung UV der ersten Verbraucher V zuführbar ist. Zwischen den nicht invertierenden Eingang des Operationsverstärkers OP1 und das weitere Masseleitungsteilstück GND3 ist ein Widerstand R1 und parallel dazu ein Kondensator C1 sowie eine Reihenschaltung aus einem steuerbaren Schalter M3 und einer Referenzspannungsquelle UREF geschaltet. Der steuerbare Schalter M3 weist einen Steuereingang auf, der mit dem Ausgang des ersten Spannungssensors SE1 verbunden ist. Der Ausgang U5 des Operationsverstärkers OP1 ist mit dem Steuereingang des steuerbaren Widerstandselements M2 verbunden. Der steuerbare Schalter M3 ist beispielsweise durch ein Relais oder durch einen MOSFET realisiert.

Im betriebsbereiten Zustand des Systems ist der steuerbare Schalter M3 geschlossen und verbindet den nicht invertierenden Eingang des Operationsverstärkers OP1 mit der Referenzspannungsquelle UREF. Somit kann die am invertierenden Eingang anliegende Versorgungsspannung UV der ersten Verbraucher V auf die Spannung der Referenzspannungsquelle UREF geregelt werden. Wechselt das Ausgangssignal des ersten Spannungssensors SE1 von HIGH auf LOW, wird der steuerbare Schalter M3 geöffnet. Daraufhin entlädt sich der Kondensator C1, der zuvor bei geschlossenem steuerbaren Schalter M3 auf die Referenzspannung aufgeladen war, über den Widerstand R1. Dadurch wird eine zeitlich sich verringernde Referenzspannung erzeugt. Dies führt zu einem sich ebenfalls zeitlich verringernden Ausgangssignal U5, und die Versorgungsspannung UV der ersten Verbraucher V wird entsprechend durch das steuerbare Widerstandselement M2 mit zunehmender Entladung des Kondensators C1 bis auf Null abgeregelt.

Bei einer anderen Variante der Abregelungsschaltung ist die Referenzspannungsquelle UREF weggelassen. Statt dessen wird über den steuerbaren Schalter M3 dem nicht invertierenden Eingang des Operationsverstärkers OP1 direkt die Sekundärbatteriespannung UBATT zugeführt. Diese Variante findet in solchen Fällen Verwendung, bei denen die ersten Verbraucher V nicht unbedingt mit einer geregelten Versorgungsspannung UV betrieben werden müssen.

Bei einer weiteren Variante der Abregelungsschaltung besteht diese lediglich aus einem Mikrocontroller. Wenn der erste Spannungssensor SE1 mit seinem Ausgangssignal U2 die Abregelung auslöst, wird die Spannung am Ausgang U5 des Mikrocontrollers in kleinen Schritten reduziert, um dadurch mittels des steuerbaren Widerstandselements M2 die ersten Verbraucher V abzuregeln.

Bei weiteren Varianten kann statt einer Spannungsregelung eine Strom-, Drehzahl- Helligkeits-, oder Lautstärkeabregelung realisiert sein.

Ferner kann statt einer Abregelungsschaltung eine Steuerschaltung vorgesehen sein, die dem steuerbaren Widerstandselement M2 bei Vorliegen einer Abschaltbedingung ein zeitlich sich veränderndes Signal U5 zuführt, das unabhängig von der Versorgungsspannung UV der ersten Verbraucher V ist, um so den Strom durch die ersten Verbraucher V zu verringern.

## Patentansprüche

1. Verfahren zum Abschalten eines elektrischen Geräts mit mehreren an eine Spannungsquelle angeschlossenen Verbrauchern, bei dem der von der Spannungsquelle gelieferte Strom kontinuierlich oder schrittweise verringert wird, worin in einem ersten Schritt der von der Spannungsquelle (B) an mindestens einen ersten Verbraucher (V) gelieferte Strom bis auf Null verringert wird, und danach in einem zweiten Schritt der von der Spannungsquelle (B) an mindestens einen weiteren Verbraucher (V1) gelieferte Strom abgeschaltet wird.

2. Verfahren nach Anspruch 1, **dadurch gekennzeichnet, daß** der an den oder die ersten Verbraucher (V) gelieferte Strom bis auf einen voreinstellbaren Wert, beispielsweise Null, verringert wird.

3. Verfahren nach Anspruch 1 oder 2, **dadurch gekennzeichnet, daß** gleichzeitig mit dem Abschalten des oder der weiteren Verbraucher(s) (V1) auch der oder die erste(n) Verbraucher (V) abgeschaltet wird (werden).

4. Verfahren nach einem der vorhergehenden Ansprüche, **dadurch gekennzeichnet, daß** die Spannung der Spannungsquelle (B) durch einen ersten Spannungssensor (SE1) bestimmt wird, der ein Ausgangssignal (U2) liefert, und daß der an den oder die ersten Verbraucher (V) gelieferte Strom verringert wird, wenn die Spannung (UBATT) der Spannungsquelle (B) einen Schwellwert unterschreitet.

5. Verfahren nach einem der vorhergehenden Ansprüche, **dadurch gekennzeichnet, daß** mindestens ein weiterer Sensor (SE3), insbesondere ein Temperatursensor vorhanden ist, der ein Ausgangssignal liefert, und daß der an den oder die ersten Verbraucher (V) gelieferte Strom verringert wird, wenn das Ausgangssignal des weiteren Sensors (SE3) einen Schwellwert über- oder unterschreitet.

6. Verfahren nach Anspruch 4 oder 5, **dadurch gekennzeichnet, daß** nach Ablauf einer bestimmten Zeit nach Beginn der Verringerung des an den oder die ersten Verbraucher (V) gelieferten Stroms zumindest der an die weiteren Verbraucher (V1) gelieferte Strom abgeschaltet wird.

7. Verfahren nach Anspruch 4 oder 5, **dadurch gekennzeichnet, daß** die Spannung am ersten Verbraucher (V) durch einen zweiten Spannungssensor (SE2) bestimmt wird, der ein Ausgangssignal (U1) liefert, und daß zumindest der an die weiteren Verbraucher (V1) gelieferte Strom abgeschaltet wird, wenn die Spannung am ersten Verbraucher (V) einen Schwellwert unterschreitet.

8. Schaltungsanordnung zur Abschaltung mindestens eines an eine Spannungsquelle (B) angeschlossenen Verbrauchers (V) mit einem steuerbaren Widerstandselement (M2) und einer das steuerbare Widerstandselement (M2) ansteuernden Regelschaltung, wobei die Schaltungsanordnung ferner ein steuerbares Schaltelement (M1) zur Abschaltung mindestens eines weiteren Verbrauchers (V1) aufweist, das durch die Regelschaltung ansteuerbar ist, und die Regelschaltung so ausgebildet ist, daß erst nach Verringerung bis auf Null des durch mindestens einen ersten Verbraucher (V) fließenden Stroms der oder die weitere(n) Verbraucher (V1) durch Ansteuerung des steuerbaren Schaltelements (M1) abschaltbar ist (sind).

9. Schaltungsanordnung nach Anspruch 8, **dadurch gekennzeichnet, daß** die Regelschaltung so ausgebildet ist, daß erst nach Verringerung des durch den oder die ersten Verbraucher (V) fließenden Stroms der oder die ersten Verbraucher (V) durch Ansteuerung des steuerbaren Schaltelements (M1) abschaltbar ist (sind).

10. Schaltungsanordnung nach Anspruch 8 oder 9, **dadurch gekennzeichnet, daß** die Regelschaltung eine logische Verknüpfungsschaltung (L) und eine Abregelungsschaltung (A) enthält, denen ein Ausgangssignal (U2) eines ersten Spannungssensors (SE1) zur Bestimmung der Spannung (UBATT) der Spannungsquelle (B) zuführbar ist.

11. Schaltungsanordnung nach Anspruch 10, **dadurch gekennzeichnet, daß** der logischen Verknüpfungsschaltung (L) ein Ausgangssignal (U1) eines zweiten Spannungssensors (SE2) zur Bestimmung der an dem oder den ersten Verbraucher(n) (V) anliegenden Spannung (UV) zuführbar ist.

12. Schaltungsanordnung nach Anspruch 10 oder 11, **dadurch gekennzeichnet, daß** die Spannungsquelle (B) eine Batterie oder eine mindestens eine Solarzelle enthaltende Gleichspannungsquelle ist.

13. Schaltungsanordnung nach Anspruch 12, **dadurch gekennzeichnet, daß** der logischen Verknüpfungsschaltung (L) ein Ausgangssignal (U3) eines Ladenetzteils (N) zum Laden einer Sekundärbatterie zuführbar ist.

14. Schaltungsanordnung nach einem der Ansprüche 8 bis 13, **dadurch gekenneichnet,** daß der Regelschaltung ein Ausgangssignal mindestens eines weiteren Sensors (SE3), insbesondere eines Temperatursensors, zuführbar ist.

15. Schaltungsanordnung nach einem der vorangehenden Ansprüche 8 bis 14, **dadurch gekennzeichnet, daß** die Regelschaltung eine Zeitschaltung enthält, die nach einer bestimmten Zeit nach Beginn der Verringerung des Stroms die Verbraucher abschaltet.

16. Schaltungsanordnung nach einem der Ansprüche 8 bis 15, **dadurch gekennzeichnet, daß** das steuerbare Widerstandselement (M2) ein MOSFET ist, der von der Abregelungsschaltung (A) ansteuerbar ist, und daß das steuerbare Schaltelement (M1) ein MOSFET oder ein Relais ist, das von der logischen Verknüpfungsschaltung (L) ansteuerbar ist.

17. Schaltungsanordnung nach einem der Ansprüche 10 bis 16, **dadurch gekennzeichnet, daß** die logische Verknüpfungsschaltung (L) ein ODER-Gatter aufweist.

18. Schaltungsanordnung nach einem der Ansprüche 10 bis 17, **dadurch gekennzeichnet, daß** der Abregelungsschaltung (A) ein Signal zuführbar ist, das der an den ersten Verbrauchern (V) anliegenden Spannung (UV) entspricht.

19. Schaltungsanordnung nach Anspruch 18, **dadurch gekennzeichnet, daß** die Abregelungsschaltung (A) einen Operationsverstärker (OP1) enthält, dem das der an den ersten Verbrauchern (V) anliegenden Spannung (UV) entsprechende Signal sowie eine Referenzspannung (UREF; UBATT) zuführbar ist, und dessen Ausgangssignal (U5) dem steuerbaren Widerstandselement (M2) zuführbar ist.

20. Schaltungsanordnung nach Anspruch 19, **dadurch gekennzeichnet, daß** die Abregelungsschaltung (A) einen steuerbaren Schalter (M3) enthält, der durch den ersten Spannungssensor (SE1) steuerbar ist, und daß durch den steuerbaren Schalter (M3) statt der Referenzspannung (UREF) eine sich verändernde Spannung, insbesondere die Spannung eines sich über einen Widerstand (R1) entladenden Kondensators (C1), dem Operationsverstärker (OP1) zuführbar ist.

## Claims

1. A method for disconnecting an electrical apparatus including several loads connected to a voltage source, in which the current supplied by the voltage source is reduced continuously or in steps, comprising in a first step reducing down to zero value the current supplied by the voltage source (B) to at least one first load (V), and in a subsequent second step turning off the current supplied by the voltage source (B) to at least one further load (V1).

2. The method as claimed in claim 1, **characterized in that** the current supplied to the first load(s) (V) is reduced to a presettable value, for example, zero value.

3. The method as claimed in claim 1 or 2, **characterized in that** the first load(s) (V) is/are disconnected simultaneously with the disconnection of the further load(s) (V1).

4. The method as claimed in any one of the preceding claims, **characterized in that** the voltage of the voltage source (B) is determined by a first voltage sensor (SE1) delivering an output signal (U2), and that the supply of current to the first load(s) (V) is reduced when the voltage (UBATT) of the voltage source (B) drops below a threshold value.

5. The method as claimed in any one of the preceding claims, **characterized in that** at least one further sensor (SE3) is provided, particularly a temperature sensor, which delivers an output signal, and that the supply of current to the first load(s) (V) is reduced when the output signal of the further sensor (SE3) exceeds or falls below a threshold value.

6. The method as claimed in claim 4 or 5, **characterized in that,** following expiration of a prescribed time period after start of the reduction of the supply of current to the first load(s) (V), at least the supply of current to the further loads (V1) is turned off.

7. The method as claimed in claim 4 or 5, **characterized in that** the voltage across the first load (V) is determined by a second voltage sensor (SE2) delivering an output signal (U1), and that at least the supply of current to the further loads (V1) is turned off when the voltage across the first load (V) falls below a threshold value.

8. A circuit arrangement for disconnecting at least one load (V) connected to a voltage source (B), with a controllable resistor device (M2) and a control circuit driving the controllable resistor device (M2), wherein the circuit arrangement further comprises a controllable switching device (M1) for disconnecting at least one further load (V1), said switching device being adapted to be driven by the control circuit, and the control circuit is configured such that it is not until after the current flowing through at least one first load (V) is reduced that the further load(s) (V1) can be disconnected by driving the controllable switching device (M1).

9. The circuit arrangement as claimed in claim 8, **characterized in that** the control circuit is configured such that it is not until after the current flowing through the first load(s) (V) is reduced that the first load(s) (V) can be disconnected by driving the controllable switching device (M1).

10. The circuit arrangement as claimed in claim 8 or 9, **characterized in that** the control circuit comprises a combinational logic system (L) and a downward adjustment circuit (A) which are adapted to receive an output signal (U2) of a first voltage sensor (SE1) for determining the voltage (UBATT) of the voltage source (B).

11. The circuit arrangement as claimed in claim 10, **characterized in that** the combinational logic system (L) is adapted to receive an output signal (U1) of a second voltage sensor (SE2) for determining the voltage (UV) residing at the first load(s) (V).

12. The circuit arrangement as claimed in claim 10 or 11, **characterized in that** the voltage source (B) is a battery or a direct-current voltage source having at least one solar cell.

13. The circuit arrangement as claimed in claim 12, **characterized in that** the combinational logic system (L) is adapted to receive an output signal (U3) of a charging power supply (N) for charging a secondary battery.

14. The circuit arrangement as claimed in any one of the claims 8 to 13, **characterized in that** the control circuit is adapted to receive an output signal of at least one further sensor (SE3), in particular a temperature sensor.

15. The circuit arrangement as claimed in any one of the preceding claims 8 to 14, **characterized in that** the control circuit includes a timing circuit that disconnects the loads after a prescribed time period following the beginning of the current reduction.

16. The circuit arrangement as claimed in any one of the claims 8 to 15, **characterized in that** the controllable resistor device (M2) is a MOSFET drivable by the downward adjustment circuit (A), and that the controllable switching device (M1) is a MOSFET or a relay drivable by the combinational logic system (L).

17. The circuit arrangement as claimed in any one of the claims 10 to 16, **characterized in that** the combinational logic system (L) includes an OR gate.

18. The circuit arrangement as claimed in any one of the claims 10 to 17, **characterized in that** a signal is deliverable to the downward adjustment circuit (A) which signal corresponds to the voltage (UV) residing at the first loads (V).

19. The circuit arrangement as claimed in claim 18, **characterized in that** the downward adjustment circuit (A) includes an operational amplifier (OP1) which is adapted to receive the signal corresponding to the voltage (UV) residing at the first loads (V) as well as a reference voltage (UREF; UBATT), and whose output signal (U5) is deliverable to the controllable resistor device (M2).

20. The circuit arrangement as claimed in claim 19, **characterized in that** the downward adjustment circuit (A) includes a controllable switching device (M3) which is controllable by the first voltage sensor (SE1), and that said controllable switching device (M3) is operable to deliver to the operational amplifier (OP1), instead of the reference voltage (UREF), a varying voltage, in particular the voltage of a capacitor (C1) discharging through a resistor (R1).

## Revendications

1. Procédé pour débrancher un appareil électrique comportant plusieurs appareils d'utilisation raccordés à une source de tension, selon lequel le courant délivré par la source de tension est réduit continûment ou pas-à-pas, et selon lequel lors d'une première étape, le courant délivré par la source de tension (B) à au moins un premier appareil d'utilisation (V) est réduite à zéro, puis, lors d'une seconde étape, le courant délivré par la source de tension (B) par au moins un autre appareil d'utilisation (V) est interrompu.

2. Procédé selon la revendication 1, **caractérisé en ce que** le courant délivré à l'appareil d'utilisation ou aux premiers appareils d'utilisation (V) est réduit jusqu'à une valeur pouvant être préréglée, par exemple zéro.

3. Procédé selon la revendication 1 ou 2, **caractérisé en ce qu'**en même temps que les autres appareils d'utilisation (V1) sont débranchés, également le(s) premier(s) appareil(s) d'utilisation (V) est(sont) débranché(s).

4. Procédé selon l'une des revendications précédentes, **caractérisé en ce que** la source de tension (B) est déterminée par un premier capteur de tension (SE1), qui délivre un signal de sortie (U2), et que le courant délivré par le ou les premiers appareils d'utilisation (V) est réduit lorsque la tension (UBATT) de la source de tension (B) tombe au-dessous d'une valeur de seuil.

5. Procédé selon l'une des revendications précédentes, **caractérisé en ce qu'**il est prévu au moins un autre capteur (SE3), notamment un capteur de température, qui délivre un signal de sortie, et que le courant délivré à l'appareil d'utilisation ou aux premiers appareils d'utilisation (V) est réduit lorsque le signal de sortie de l'autre capteur (SE3) dépasse une valeur de seuil par valeurs supérieures ou par valeurs inférieures.

6. Procédé selon la revendication 4 ou 5, **caractérisé en ce qu'**après l'écoulement d'un certain intervalle de temps après le début de la réduction du courant délivré à l'appareil d'utilisation ou aux premiers appareils d'utilisation (V), au moins le courant délivré aux autres appareils d'utilisation (V1) est interrompu.

7. Procédé selon la revendication 4 ou 5, **caractérisé en ce que** la tension aux bornes du premier appareil d'utilisation (V) est déterminée au moyen d'un second capteur de tension (SE2), qui délivre un signal de sortie (U1), et qu'au moins le courant délivré aux autres appareils d'utilisation (V1) est interrompu lorsque la tension aux bornes du premier appareil d'utilisation (V) tombe au-dessous d'une valeur de seuil.

8. Montage pour débrancher au moins un appareil d'utilisation (V) raccordé à une source de tension (B), comportant un élément formant résistance commandable (M2) et un circuit de régulation commandant l'élément formant résistance commandable (M2), le montage comportant en outre un élément de commutation commandable (M1) pour débrancher au moins un autre appareil d'utilisation (V1), qui est commandable par le circuit de régulation, et le circuit de régulation étant agencé de telle sorte que c'est seulement après la réduction jusqu'à zéro du courant circulant dans au moins un premier appareil d'utilisation (V), que le ou les autres appareils d'utilisation (V1) est(sont) débranché(s) au moyen de la commande de l'élément de commutation commandable (M1).

9. Montage selon la revendication 8, **caractérisé en ce que** le circuit de régulation est agencé de telle sorte que c'est seulement après réduction du courant circulant dans l'appareil d'utilisation ou dans les premiers appareils d'utilisation (V), que le ou les premiers appareils d'utilisation (V1) peuvent être débranchés par commande de l'élément de commutation commandable (M1).

10. Montage selon la revendication 8 ou 9, **caractérisé en ce que** le circuit de régulation contient un circuit combinatoire logique (L) et un circuit de régulation (A), auxquels peut être envoyé un signal de sortie (U2) d'un premier capteur de tension (S1) pour la détermination de la tension (UBATT) de la source de tension (B).

11. Montage selon la revendication 10, **caractérisé en ce que** le circuit combinatoire logique (L) d'un signal de sortie (U1) d'un second capteur de tension (SE2) peut être envoyé au circuit combinatoire logique (L) pour déterminer la tension (UV) appliquée à l'appareil d'utilisation ou aux premiers appareils d'utilisation (V).

12. Montage selon la revendication 10 ou 11, **caractérisé en ce que** la source de tension (B) est une batterie ou une source de tension continue contenant au moins une pile solaire.

13. Montage selon la revendication 12, **caractérisé en ce qu'**un signal de sortie (U1) d'une partie du réseau de charge (N) est envoyé au circuit combinatoire logique (L) pour charger une batterie secondaire.

14. Montage selon l'une des revendications 8 à 13, **caractérisé en ce que** le signal de sortie d'au moins un autre capteur (SE3), notamment d'un capteur de température, peut être envoyé au circuit de régulation.

15. Montage selon l'une des revendications précédentes 8 et 14, **caractérisé en ce que** le circuit de régulation contient un circuit de temporisation, qui débranche les appareils d'utilisation au bout d'un certain temps après le début de la réduction du courant.

16. Montage selon l'une des revendications 8 à 15, **caractérisé en ce que** l'élément formant résistance commandable (M2) est un transistor MOSFET, qui peut être commandé par le circuit d'arrêt (A) et que l'élément de commutation commandable (M1) est un transistor MOSFET ou un relais, qui peut être commandé par le circuit combinatoire logique (L).

17. Montage selon l'une des revendications 10 à 16, **caractérisé en ce que** le circuit combinatoire logique (L) comporte une porte OU.

18. Montage selon l'une des revendications 10 à 17, **caractérisé en ce qu'**un signal, qui correspond à la tension (UV) appliquée aux premiers appareils d'utilisation (V), peut être envoyé au circuit d'arrêt (A).

19. Montage selon la revendication 18, **caractérisé en ce que** le circuit d'arrêt (A) contient un amplificateur opérationnel (OP1), auquel peuvent être envoyé le signal, qui correspond à la tension (UV) appliquée aux premiers appareils d'utilisation (V), ainsi qu'une tension de référence (UREF; UBATT), et dont le signal de sortie (UC) peut être envoyé à l'élément formant résistance commandable (MM2).

20. Montage selon la revendication 19, **caractérisé en ce que** le circuit de régulation (A) contient un commutateur commandable (M3), qui peut être commandé par le premier capteur de tension (SE1) et qu'une tension variable, notamment la tension d'un condensateur (C1), qui se décharge dans une résistance (R1), peut être envoyée à la place de la tension de référence (UREF) à l'amplificateur opérationnel (OP1), par l'intermédiaire du commutateur commandable (M3).
